# EUROPÄISCHE PATENTSCHRIFT

(11) **EP 3 776 726 B1**
(45) Veröffentlichungstag und Bekanntmachung des Hinweises auf die Patenterteilung: **17.11.2021**
(21) Anmeldenummer: 19726379.1
(22) Anmeldetag: 22.05.2019
(51) Int. Cl.: H01Q 1/24, H01Q 1/42, H01Q 1/02

(54) **ENTWÄRMUNGSVERBESSERUNG EINER MOBILFUNKANTENNE ZUM ANSCHLUSS AN ZUMINDEST EINE BASISSTATION**
IMPROVING HEAT DISSIPATION FROM A MOBILE RADIO ANTENNA FOR CONNECTION TO AT LEAST ONE BASE STATION
AMÉLIORATION DE LA DISSIPATION DE CHALEUR D'UNE ANTENNE DE TÉLÉPHONIE MOBILE POUR LA CONNEXION À AU MOINS UNE STATION DE BASE

(30) Priorität: 24.05.2018 DE 202018102912 U
(43) Veröffentlichungstag der Anmeldung: 17.02.2021
(73) Patentinhaber: Telefonaktiebolaget LM Ericsson (PUBL), 165 83 Stockholm (SE)
(72) Erfinder: GERLINGER, Thomas, 83543 Rott am Inn (DE); FAHRENSCHON, Josef, 83026 Rosenheim (DE)
(74) Vertreter: Flach Bauer Stahl Patentanwälte Partnerschaft mbB
(86) Internationale Anmeldenummer: PCT/EP2019/063226
(87) Internationale Veröffentlichungsnummer: WO 2019/224254

(56) Entgegenhaltungen:
- DE-A1-102016 112 701
- DE-A1-102016 115 099
- US-B1- 7 043 280

## Beschreibung

Die Erfindung betrifft eine verbesserte Entwärmung einer Mobilfunkantenne zum Anschluss an zumindest eine Basisstation. Eine derartige Mobilfunkantenne wird meistens auf einem Mast oder an einer Wand montiert und dient zur Kommunikation mit mobilen Endgeräten wie beispielsweise Smartphones.

Dadurch, dass immer mehr Mobilfunkbänder unterstützt werden müssen, steigt im inneren der Mobilfunkantenne die Integrationsdichte. Sie werden außerdem mit zunehmend höheren Sendeleistungen betrieben, so dass höhere Verlustleistungen anfallen. Hinzu kommt noch, dass die Antennen meist an prominenten Positionen installiert sind, die direkt von der Sonneneinstrahlung betroffen sind. Dadurch erhöht sich die Temperatur im Inneren der Mobilfunkantenne. Problematisch ist außerdem, dass eine erhöhte Temperatur zu erhöhten Dämpfungen und damit wiederum zu einer erhöhten Verlustleistung führt, wodurch die Temperatur weiter erhöht wird. Für einen sicheren Betrieb muss Wärmeenergie abgeführt werden. Daher kommt der Kühlung der Komponenten innerhalb der Mobilfunkantenne eine immer höhere Bedeutung zu.

Derzeit erfolgt die Kühlung insbesondere über Wärmekonvektion bzw. Wärmeleitung. Um eine Kühlung über Wärmeleitung erreichen zu können, wird die Wärmequelle über einen Wärmeleiter mit einer Wärmesenke verbunden. Dabei sollten die Wärmeübergangswiderstände möglichst niedrig und die Wärmeleitfähigkeit möglichst hoch sein. Zur Kühlung mittels Wärmekonvektion werden Luftströmungen innerhalb der Mobilfunkantenne verwendet. So steigt warme Luft innerhalb der Mobilfunkantenne nach oben wo sie dann abkühlen und wieder absinken kann. Es entsteht eine Luftzirkulation, die zur Kühlung der Komponenten innerhalb der Mobilfunkantenne dient.

Die US 7 043 280 B1 beschreibt eine Antenne, welche mehrere Strahlerelemente aufweist, die auf einer Seite eines Reflektors angeordnet sind. Auf der Rückseite des Reflektors sind aktive Komponenten angeordnet, die Verlustwärme erzeugen. Um diese Verlustwärme effizient abführen zu können ist das Gehäuse zweigeteilt. Ein erster Gehäuseteil besteht aus Metall und ein zweiter Gehäuseteil ist das Radom. Der erste Gehäuseteil liegt an der Rückseite des Reflektors derart an, dass die aktiven Komponenten ihre Verlustwärme mittels Wärmeleitung an den ersten Gehäuseteil übertragen können. Der erste Gehäuseteil weist nach außen hin eine Wärmeemissionsschicht und nach innen hin eine Wärmeabsorptionsschicht auf.

Nachteilig an den vorrangig genutzten Kühlmethoden ist, dass diese immer öfter an ihre Grenzen stoßen. Sind die Mobilfunkantennen sehr dicht bepackt, dann bringt eine Entwärmung über Wärmekonvektion ein immer schlechteres Ergebnis. Auch ist die Anbindung der Wärmequellen an die Wärmesenken häufig nicht möglich, weil sich dadurch Intermodulationsprobleme erhöhen bzw. weil die Wärmesenke ebenfalls gekühlt werden müsste.

Es ist daher die Aufgabe der hier vorliegenden Erfindung eine verbesserte Entwärmung von denjenigen Komponenten sicherzustellen, in denen viel Verlustwärme anfällt.

Die Aufgabe wird durch die Mobilfunkantenne des unabhängigen Anspruchs 1 gelöst. In den Unteransprüchen sind vorteilhafte Weiterbildungen der Mobilfunkantenne wiedergegeben.

Die erfindungsgemäße Mobilfunkantenne umfasst ein Radom, eine Reflektoranordnung (einteilig oder mehrteilig), mehrere Mobilfunkstrahler und zumindest ein oder mehrere Elektronikmodule (Wärmequellen). Die Reflektoranordnung, die mehreren Mobilfunkstrahler und das zumindest eine oder die mehreren Elektronikmodule sind dabei innerhalb des Radoms angeordnet. Das Radom umfasst eine Vorderwand, eine Rückwand und Seitenwände. Die mehreren Mobilfunkstrahler sind dabei auf einer Vorderseite der Reflektoranordnung angeordnet und das zumindest eine oder die mehreren Elektronikmodule auf einer Rückseite der Reflektoranordnung. Die Reflektoranordnung besteht dabei aus einem elektrisch leitfähigen Material, insbesondere einem Metall wie beispielsweise Aluminium. Zumindest eines der mehreren Elektronikmodule umfasst eine Elektronikeinheit und ein Modulgehäuse. Die Elektronikeinheit ist dabei in dem Modulgehäuse angeordnet. Das Modulgehäuse des zumindest einen Elektronikmoduls ist aus Metall oder einer Metalllegierung gebildet und umfasst eine Vorderseite, eine Rückseite, Stirnseiten und Seitenwände. Die Vorderseite des Modulgehäuses des zumindest einen Elektronikmoduls zeigt dabei in Richtung der Rückwand des Radoms, wohingegen die Rückseite des Modulgehäuses des zumindest einen Elektronikmoduls der Vorderseite des Modulgehäuses des zumindest einen Elektronikmoduls gegenüberliegt und in Richtung der Vorderwand des Radoms zeigt. Zumindest die Oberfläche der Vorderseite und/oder die Oberfläche der Rückseite des Modulgehäuses ist bzw. sind zumindest überwiegend mit einer Wärmeemissionsschicht beschichtet. Diese umfasst einen Emissionsgrad ε, mit ε ≥ 0,6.

Es ist besonders vorteilhaft, dass die Oberfläche des aus Metall bzw. einer Metalllegierung bestehenden Modulgehäuses noch zusätzlich beschichtet ist. Umfangreiche Untersuchungen und Versuche haben ergeben, dass die gesamte Entwärmung der Mobilfunkantenne durch eine verbesserte Emission von Wärmestrahlung insgesamt signifikant verbessert wird.

Weitere Untersuchungen haben ergeben, dass der Einsatz eines Lacks, der die Wärmeemissionsschicht bildet, besonders gute Ergebnisse liefert. Dies gilt insbesondere dann, wenn es sich bei dem Lack um einen Kräusellack, der auch als Schrumpflack bezeichnet werden kann, handelt. Ein solcher Lack hinterlässt nach dem Trocknen eine inhomogene stark raue Oberfläche bzw. eine Berg-Tal-Struktur, wobei dadurch einerseits die Oberfläche vergrößert wird und andererseits eine Emission in eine Vielzahl von Richtungen stattfindet. Durch den Einsatz eines entsprechenden Kräusellacks werden außerdem die Emissionseigenschaften im Infrarotbereich erhöht, weil ein solcher Kräusellack deutlich bessere Strahlungseigenschaften aufweist und einem schwarzen Strahler näherkommt als eine (blanke) Metalloberfläche.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnung zeigen im Einzelnen:
- Figur 1:: einen Längsschnitt durch eine erfindungsgemäße Mobilfunkantenne; und
- Figur 2:: ein Ausführungsbeispiel eines Elektronikmoduls.

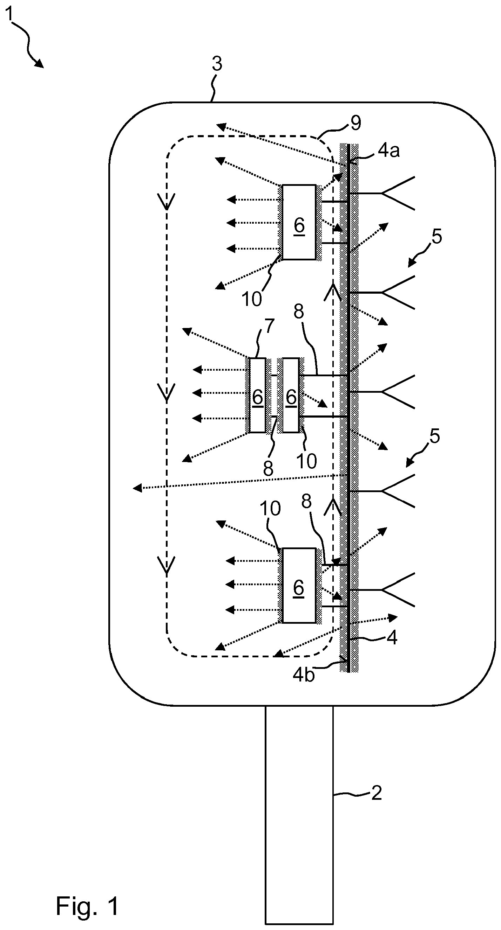

Figur 1 zeigt einen Längsschnitt durch eine erfindungsgemäße Mobilfunkantenne 1. Diese ist an einem Antennenmast 2 befestigt. Die Mobilfunkantenne 1 umfasst ein Radom 3, eine Reflektoranordnung 4, mehrere Mobilfunkstrahler 5 und in diesem Fall mehrere Elektronikmodule 6. Alle diese Komponenten sind vollständig innerhalb des Radoms 3 angeordnet. Die Mobilfunkstrahler 5 sind dabei auf einer Vorderseite 4a der Reflektoranordnung 4 angeordnet. Die Elektronikmodule 6 sind dagegen auf einer Rückseite 4b der Reflektoranordnung 4 angeordnet. Bei den Elektronikmodulen 6 handelt es sich beispielsweise um einen Combiner und/oder einen Splitter und/oder einen Phasenschieber und/oder einen Schirmdeckel und/oder um ein Netzteil und/oder um einen Motor.

Die Elektronikmodule 6 stellen dabei eine Wärmequelle dar. Dies bedeutet, dass sie sich im Betrieb der Mobilfunkantenne 1 erwärmen und dass es je nach Betriebszustand erforderlich sein kann, dass zumindest eine gewisse Wärmeenergie abgeführt wird, um eine Kühlung und damit einen weiteren sicheren Betrieb des jeweiligen Elektronikmoduls 6 zu gewährleisten.

Eine Möglichkeit die überschüssige Wärmeenergie abzuleiten ist durch Wärmeleitung. Dies könnte dadurch gelingen, indem die Elektronikmodule 6 direkt auf der Rückseite 4b der Reflektoranordnung 4 angeordnet sind, wobei ein möglichst niedriger Wärmeübergangswiderstand vorliegen sollte. Nachdem zumindest ein Elektronikmodul 6 allerdings ein Modulgehäuse 7 umfasst, welches insbesondere aus Metall bzw. einer Metalllegierung wie Aluminium besteht, würden sich bei einer direkten Anbindung, also beispielsweise bei einem direkten Aufsetzen oder Verschrauben der Elektronikmodule 6 auf der Rückseite 4b der Reflektoranordnung 4, die elektrischen Eigenschaften der Mobilfunkantenne 1 verschlechtern. Insbesondere würden zusätzliche Intermodulationen auftreten.

Aus diesem Grund sind die Elektronikmodule 6 über Abstandshalter 8 beabstandet an der Reflektoranordnung 4 befestigt. Diese Abstandshalter 8 bestehen vorzugsweise aus einem dielektrischen Material. Dies ist zwar im Hinblick auf die elektrischen Eigenschaften der Mobilfunkantenne vorteilhaft, allerdings ist dadurch der Wärmeübergangswiderstand schlecht, so dass eine reine Kühlung über Wärmeleitung nicht mehr sicher möglich ist. Außerdem dargestellt, dass mehrere Elektronikmodule 6 auch mittels Abstandshaltern 8 aufeinander (horizontal beabstandet) angeordnet sind. Diese Abstandshalter 8 bestehen aus einem Dielektrikum. Dieses Dielektrikum hat beispielsweise eine Wärmeleitfähigkeit von weniger als 6 W/mK.

Die Kühlung findet daher heutzutage überwiegend mittels Wärmekonvektion statt. Dies bedeutet, dass die Elektronikmodule 6 mittels einer Luftströmung 9 gekühlt werden. Weil die Elektronikmodule 6 meistens übereinander (vertikal beabstandet) an der Rückseite 4b der Reflektoranordnung 4 angeordnet sind, stellt sich die Luftströmung 9 ein, die sich vom unteren Bereich, also vom Bodenbereich des Radoms 3, in Richtung des oberen Endbereichs des Radoms 3 erstreckt. Die Luftströmung 9 ist in Figur 1 gestrichelt (-----) dargestellt. Am oberen Ende des Radoms 3 kühlt die Luft wieder ab und sinkt in der Nähe der Radomseitenwände bzw. der Radomrückwand in Richtung des unteren Endbereichs ab. Nachdem der Aufnahmeraum der Mobilfunkantenne 1 heutzutage allerdings immer dichter mit Komponenten, zu denen auch Kabel gehören, gepackt wird, wird dadurch auch der Wärmeentzug, also die Kühlung der Elektronikmodule 6 über Wärmekonvektion eingeschränkt. Daher gehen viele Hersteller dazu über aktive Lüftungssysteme einzusetzen, also elektrisch angetriebene Lüfter. Diese Lüfter sind ebenfalls störanfällig und aufwendig zu installieren und bei einem Ausfall nur schwer zu tauschen. Dagegen kommt die erfindungsgemäße Mobilfunkantenne 1 ohne solche aktiven Lüfter aus. Insbesondere sind keine derartigen Lüfter an den Elektronikmodulen 6 angeordnet bzw. mit diesen verschraubt.

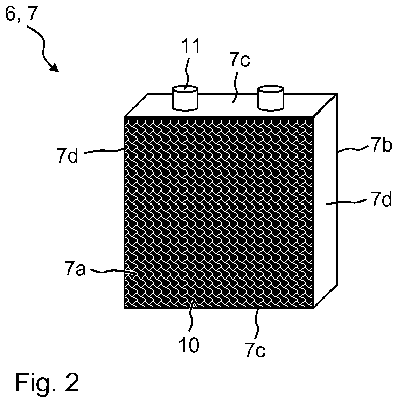

Nicht dargestellt ist, dass die Elektronikmodule 6 eine Elektronikeinheit aufweisen, welche im Betrieb für die Erwärmung verantwortlich ist, wobei diese Elektronikeinheit von dem Modulgehäuse 7 umgeben ist. Ein solches Elektronikmodul 6 ist mit seinem Modulgehäuse 7 in Figur 2 dargestellt. Das Modulgehäuse 7 umfasst eine Vorderseite 7a, eine Rückseite 7b, Stirnseiten 7c und Seitenwände 7d. Die Vorderseite 7a zeigt dabei insbesondere in Richtung des Radoms 3. Die Rückseite 7b zeigt dagegen in Richtung der Rückseite 4b der Reflektoranordnung 4. Die Vorderseite 7a und die Rückseite 7b verlaufen vorzugsweise parallel zueinander und weiter vorzugsweise parallel zur Rückseite 4b der Reflektoranordnung 4. Diese Seiten können auch eine geriffelte Struktur oder Rinnen aufweise, die sich im montierten Zustand des Elektronikmoduls 6 vertikal erstrecken.

Die Oberfläche der Vorderseite 7a entspricht in etwa der Oberfläche der Rückseite 7b. Die Oberfläche der Vorderseite 7a bzw. der Rückseite 7b ist bzw. sind vorzugsweise größer als die Oberflächen der Stirnseite 7c bzw. der Seitenwand 7b alleine oder in Kombination.

Das Modulgehäuse 7 besteht vorzugsweise aus zwei Gehäusehälften, die miteinander verschraubt oder verclipst sind.

Um eine gute Schirmung der Elektronikeinheit im Modulgehäuse 7 zu gewährleisten, ist das Modulgehäuse 7 aus Metall (insbesondere Aluminium) oder einer Metalllegierung gebildet. Ein Wärmeübergangswiderstand zwischen einem solchen Modulgehäuse 7 und der Reflektoranordnung 4 wäre bei einer direkten Anbringung des Modulgehäuses 7 auf der Reflektoranordnung 4 gering. Allerdings würden sich dadurch, wie bereits erläutert, die elektrischen Eigenschaften der Mobilfunkantenne 1 verschlechtern.

Aus diesem Grund ist erfindungsgemäß vorgesehen, dass zumindest die Oberfläche der Vorderseite 7a und/oder der Rückseite 7b des Modulgehäuses 7 des zumindest einen Elektronikmoduls 6 zumindest überwiegend mit einer Wärmeemissionsschicht 10 beschichtet ist. Diese Wärmeemissionsschicht 10 hat einen Emissionsgrad ε, mit ε ≥ 0,6. Diese Wärmeemissionsschicht 10 bewirkt, dass eine Entwärmung verstärkt auch durch Wärmeemission erfolgt. Eine solche Wärmeemission ist in Figur 1 durch gepunktete Pfeile dargestellt (....).

Diese Wärmeemissionsschicht 10 soll möglichst nahe an einen schwarzen Strahler herankommen.

Bevorzugt sind mehr als 50 %, 60 %, 70 %, 80 % oder 90 % der Oberfläche zumindest der Vorderseite 7a und/oder der Rückseite 7b des Modulgehäuses 7 beschichtet. Eine vollständige Beschichtung wäre ebenfalls denkbar.

Es wäre auch möglich, dass die Stirnseiten 7c und/oder die Seitenwände 7d des Modulgehäuses 7 ebenfalls teilweise, überwiegend oder vollständig mit der Wärmeemissionsschicht 10 beschichtet sind.

Gleiches kann auch für die Vorderseite 4a und/oder die Rückseite 4b der Reflektoranordnung 4 gelten.

Es ist auch möglich, dass zumindest ein oder mehrere Teilebereiche der Oberfläche der Vorderseite 7a und/oder der Rückseite 7b des Modulgehäuses 7 von der Beschichtung mit der Wärmeemissionsschicht 10 ausgenommen ist.

Insbesondere handelt es sich dabei um diejenigen Teilbereiche, deren Temperatur im Normalbetrieb unter einem Temperaturschwellwert liegt. Dies könnte im Rahmen von Simulation ermittelt werden. Insbesondere sollte die Wärmeemissionsschicht 10 an den Bereichen aufgebracht werden, an denen sich "Hotspots" bilden.

Auch die Innenseite des Modulgehäuses 7 könnte vollständig oder überwiegend von einer derartigen Wärmeemissionsschicht 10 beschichtet sein.

Durch Nutzung einer derartigen Wärmeemissionsschicht 10 findet eine Entwärmung des zumindest einen Elektronikmoduls 6 zu mehr als 40 %, 50 %, 60 % oder 70 % über Emissionsstrahlung statt.

Bevorzugt ist das zumindest ein Modulgehäuse 7 ein Strangpressteil ist. Es könnte auch ein Gussteil, Blechteil oder anderweitig hergestelltes Bauteil sein.

Weiter bevorzugt beträgt der Emissionsgrad ε mehr als 0,65 oder 0,7 oder 0,75 oder 0,8 oder 0,85 oder 0,9 oder 0,95 oder 0,97 oder mehr als 0,98.

Bevorzugt ist die Wärmeemissionsschicht 10 durch einen Lack gebildet. Bei diesem Lack handelt es sich insbesondere um einen Sprühlack. Bevorzugt handelt es sich dabei um einen Kräusellack. Der Lack könnte auch mit einem Pinsel, durch Pulverbeschichten oder durch Eintauchen des Modulgehäuses 7 in ein Lackbad aufgetragen werden.

Der Lack umfasst dabei eine Berg-Tal-Struktur mit unterschiedlichen Schichtdicken. Wobei eine Differenz zwischen einer Schicht mit niedriger Dicke und einer Schicht mit höherer Dicke vorzugsweise größer als 70 µm oder 100 µm ist.

In Figur 2 ist eine Wärmeemissionsschicht 10 in Form eines Lacks dargestellt. Diese Schicht ist strukturiert. Die Schichtdicke der Wärmeemissionsschicht 10 ist vorzugsweise größer als 100 µm, 150 µm, 200 µm, 250 µm, 300 µm aber vorzugsweise kleiner als 500 µm, 450 µm, 400 µm, 350 µm, 300 µm oder kleiner als 250 µm. Die Wärmeemissionsschicht 10 kann dabei aus mehreren Lackschichten bestehen.

Der Lack wird vorzugsweise bei einer Temperatur von 60°C, 70°C, 80°C, 90°C aber weiter vorzugsweise von weniger als 140°C, 130°C, 120°C getrocknet. Grundsätzlich kann der Lack aber auch bei Raumtemperatur trocknen.

Der Lack wird vorzugsweise auf eine glatte Oberfläche der Vorderseite 7a und/oder der Rückseite 7b des Modulgehäuses 7 aufgetragen. Die Rauheitsklasse ist vorzugsweise kleiner als N11.

Grundsätzlich könnte die Wärmeemissionsschicht 10 auch durch eine Pulverbeschichtung gebildet sein. Die Wärmeemissionsschicht 10 könnte auch durch einen galvanischen Prozess gebildet sein und eine Eloxal-Schicht umfassen bzw. aus einer solchen bestehen.

Die Wärmeemissionsschicht 10 könnte auch durch eine Aufkleber-Einheit gebildet sein. Auf dieser Aufkleber-Einheit ist vorzugsweise noch eine Farbe und/oder ein Kräusellack aufgetragen.

Die Wärmeemissionsschicht 10 weist vorzugsweise Farbanteile auf und ist insbesondere schwarz.

Die Wärmeemissionsschicht 10 ist vorzugsweise elektrisch nicht leitfähig.

Das Modulgehäuse 7 des zumindest einen Elektronikmoduls 6 ist bevorzugt galvanisch von der Reflektoranordnung 4 getrennt.

Alles was für zumindest ein Elektronikmodul 6 beschrieben wurde kann auch für alle Elektronikmodule 6 gelten.

In Figur 2 sind noch Anschlüsse 11 dargestellt, um das Elektronikmodul 6 mit anderen Komponenten zu verbinden. Auf die Darstellung von entsprechenden Kabeln wurde in den Figuren zur besseren Übersichtlichkeit verzichtet.

Nachfolgend werden nochmals einige Vorteile der erfindungsgemäßen Mobilfunkantenne 1 gesondert hervorgehoben.

Ein besonderer Vorteil der Mobilfunkantenne 1 liegt vor, wenn diese das nachfolgende Merkmal umfasst:
- der Emissionsgrad ε ist ≥ 0,65 oder ≥ 0,7 oder ≥ 0,75 oder ≥ 0,8 oder ≥ 0,85 oder ≥ 0,9 oder ≥ 0,95 oder ≥ 0,97 oder ≥ 0,98.

Ein besonderer Vorteil der Mobilfunkantenne 1 liegt vor, wenn diese das nachfolgende Merkmal umfasst:
- eine Schichtdicke der Wärmeemissionsschicht 10 ist größer als 100µm oder 150µm oder 200µm oder 250µm oder 300µm aber vorzugsweise kleiner als 500µm oder 450µm oder 400µm oder 350µm oder 300µm oder 250µm.

Ein besonderer Vorteil der Mobilfunkantenne 1 liegt vor, wenn diese das nachfolgende Merkmal umfasst:
- der Lack ist bei einer Temperatur von mehr als 70°C getrocknet.

Ein besonderer Vorteil der Mobilfunkantenne 1 liegt vor, wenn diese das nachfolgende Merkmal umfasst:
- der Lack ist bei Raumtemperatur, insbesondere bei 23°C getrocknet.

Ein besonderer Vorteil der Mobilfunkantenne 1 liegt vor, wenn diese das nachfolgende Merkmal umfasst:
- die Oberfläche von zumindest der Vorderseite 7a und/oder der Rückseite 7b des Modulgehäuses 7 des zumindest einen Elektronikmoduls 6 unterhalb der Wärmeemissionsschicht 10 ist glatt, wobei die Rauheitsklasse vorzugsweise kleiner ist als N11.

Ein besonderer Vorteil der Mobilfunkantenne 1 liegt vor, wenn diese das nachfolgende Merkmal umfasst:
- die Wärmeemissionsschicht 10 ist durch eine Pulverbeschichtung gebildet.

Ein besonderer Vorteil der Mobilfunkantenne 1 liegt vor, wenn diese das nachfolgende Merkmal umfasst:
- die Aufkleber-Einheit ist mit dem Lack versehen.

Ein besonderer Vorteil der Mobilfunkantenne 1 liegt vor, wenn diese das nachfolgende Merkmal umfasst:
- die Wärmeemissionsschicht 10 ist elektrisch nicht leitend.

Ein besonderer Vorteil der Mobilfunkantenne 1 liegt vor, wenn diese das nachfolgende Merkmal umfasst:
- die Wärmeemissionsschicht 10 weist Farbanteile auf und ist insbesondere schwarz.

Ein besonderer Vorteil der Mobilfunkantenne 1 liegt vor, wenn diese das nachfolgende Merkmal umfasst:
- es ist zumindest ein Abstandshalter 8 vorgesehen, wobei der zumindest eine Abstandshalter 8 zwischen dem Modulgehäuse 7 des zumindest einen Elektronikmoduls 6 und der Reflektoranordnung 4 angeordnet ist, wodurch das Modulgehäuse 7 des zumindest einen Elektronikmoduls 6 beabstandet von der Reflektoranordnung 4 angeordnet ist.

Ein besonderer Vorteil der Mobilfunkantenne 1 liegt vor, wenn diese das nachfolgende Merkmal umfasst:
- der zumindest eine Abstandshalter 8 besteht aus einem Dielektrikum und hat eine Wärmeleitfähigkeit von weniger als 6W/mK.

Ein besonderer Vorteil der Mobilfunkantenne 1 liegt vor, wenn diese das nachfolgende Merkmal umfasst:
- das Modulgehäuse 7 des zumindest einen Elektronikmoduls 6 ist galvanisch von der Reflektoranordnung 4 getrennt.

Ein besonderer Vorteil der Mobilfunkantenne 1 liegt vor, wenn diese das nachfolgende Merkmal umfasst:
- die Vorderseite 7a und die Rückseite 7b des Modulgehäuses 7 des zumindest einen Elektronikmoduls 6 verlaufen parallel zueinander und parallel zur Reflektoranordnung.

Ein besonderer Vorteil der Mobilfunkantenne 1 liegt vor, wenn diese das nachfolgende Merkmal umfasst:
- die Vorderseite 7a und die Rückseite 7b des Modulgehäuses 7 des zumindest einen Elektronikmoduls 6 verlaufen parallel zueinander und senkrecht zur Reflektoranordnung.

Ein besonderer Vorteil der Mobilfunkantenne 1 liegt vor, wenn diese das nachfolgende Merkmal umfasst:
- die Vorderseite 7a und die Rückseite 7b des Modulgehäuses 7 des zumindest einen Elektronikmoduls 6 verlaufen schräg zu einander und schräg zur Reflektoranordnung.

Ein besonderer Vorteil der Mobilfunkantenne 1 liegt vor, wenn diese das nachfolgende Merkmal umfasst:
- das Modulgehäuse 7 des zumindest einen Elektronikmoduls 6 besteht aus oder umfasst:
   a) Aluminium; und/oder
   b) Magnesium; und/oder
   c) Kupfer; und/oder
   d) Messing; und/oder
   e) Edelstahl; und/oder
   f) Zink; und/oder
   g) Stahl; und/oder
   h) Gusseisen; und/oder
   i) Stahlguss; und/oder
   j) Titan; und/oder
   k) metallisierter Kunststoff; und/oder
   l) metallisierter Duroplast.

Ein besonderer Vorteil der Mobilfunkantenne 1 liegt vor, wenn diese das nachfolgende Merkmal umfasst:
- die Stirnseiten 7c und/oder die Seitenwände 7d des Modulgehäuses 7d des zumindest einen Elektronikmoduls 6 sind teilweise, überwiegend oder vollständig mit der Wärmeemissionsschicht 10 beschichtet.

Ein besonderer Vorteil der Mobilfunkantenne 1 liegt vor, wenn diese das nachfolgende Merkmal umfasst:
- das zumindest eine Elektronikmodul 6 ist eine Wärmequelle.

Die Erfindung ist nicht auf die beschriebenen Ausführungsbeispiele beschränkt.

## Patentansprüche

1. Mobilfunkantenne (1) zum Anschluss an zumindest eine Basisstation mit den folgenden Merkmalen:
- es sind ein Radom (3), eine Reflektoranordnung (4), mehrere Mobilfunkstrahler (5) und zumindest ein oder mehrere Elektronikmodule (6) vorgesehen;
- das Radom (3) umfasst eine Vorderwand, eine Rückwand und Seitenwände;
- die Reflektoranordnung (4), die mehreren Mobilfunkstrahler (5) und das zumindest eine oder die mehreren Elektronikmodule (6) sind innerhalb des Radoms (3) angeordnet;
- die mehreren Mobilfunkstrahler (5) sind auf einer Vorderseite (4a) der Reflektoranordnung (4) angeordnet;
- das zumindest eine oder die mehreren Elektronikmodule (6) sind auf einer Rückseite (4b) der Reflektoranordnung (4) angeordnet;
- zumindest ein Elektronikmodul (6) umfasst eine Elektronikeinheit und ein Modulgehäuse (7), wobei die Elektronikeinheit in dem Modulgehäuse (7) angeordnet ist;
- das Modulgehäuse (7) des zumindest einen Elektronikmoduls (6) ist aus Metall oder einer Metalllegierung und umfasst eine Vorderseite (7a), eine Rückseite (7b), Stirnseiten (7c) und Seitenwände (7d), wobei die Vorderseite (7a) des Modulgehäuses (7) des zumindest einen Elektronikmoduls (6) in Richtung der Rückwand des Radoms (3) zeigt und die Rückseite (7b) des Modulgehäuses (7) des zumindest einen Elektronikmoduls (6) der Vorderseite (7a) des Modulgehäuses (7) des zumindest einen Elektronikmoduls (6) gegenüberliegt und in Richtung der Vorderwand des Radoms (3) zeigt;
- zumindest die Oberfläche der Vorderseite (7a) und/oder der Rückseite (7b) des Modulgehäuses (7) des zumindest einen Elektronikmoduls (6) ist zumindest überwiegend mit einer Wärmeemissionsschicht (10) beschichtet, die einen Emissionsgrad ε aufweist, mit ε ≥ 0,6.

2. Mobilfunkantenne (1) nach Anspruch 1, **gekennzeichnet durch** die folgenden Merkmale:
- die Wärmeemissionsschicht (10) ist durch einen Lack gebildet; oder
- die Wärmeemissionsschicht (10) ist durch einen Sprühlack gebildet; oder
- die Wärmeemissionsschicht (10) ist durch einen Kräusellack gebildet.

3. Mobilfunkantenne (1) nach Anspruch 2, **gekennzeichnet durch** das folgende Merkmal:
- der Lack umfasst eine Berg-Tal-Struktur mit unterschiedlichen Schichtdicken, wobei eine Differenz zwischen einer Schicht mit niedriger Dicke und einer Schicht mit höherer Dicke größer als 100µm ist.

4. Mobilfunkantenne (1) nach Anspruch 2 oder 3 , **gekennzeichnet durch** das folgende Merkmal:
- die Wärmeemissionsschicht (10) besteht aus mehreren Lackschichten.

5. Mobilfunkantenne (1) nach Anspruch 1, **gekennzeichnet durch** das folgende Merkmal:
- die Wärmeemissionsschicht (10) ist eine Aufkleber-Einheit.

6. Mobilfunkantenne (1) nach Anspruch 1, **gekennzeichnet durch** das folgende Merkmal:
- die Wärmeemissionsschicht (10) ist eine Eloxal-Schicht.

7. Mobilfunkantenne (1) nach einem der vorherigen Ansprüche, **gekennzeichnet durch** das folgende Merkmal:
- zumindest ein Teil des Modulgehäuses (7) des zumindest einen Elektronikmoduls (6) ist ein Strangpressteil oder ein Gussteil.

8. Mobilfunkantenne (1) nach einem der vorherigen Ansprüche, **gekennzeichnet durch** die folgende Merkmale:
- das zumindest eine Elektronikmodul (6) und/oder die Mobilfunkantenne (1) ist lüfterlos; oder
- die Mobilfunkantenne (1) umfasst einen oder mehrere Lüfter.

9. Mobilfunkantenne (1) nach einem der vorherigen Ansprüche, **gekennzeichnet durch** das folgende Merkmal:
- mehr als 50%, 60%, 70%, 80%, 90% der Oberfläche zumindest der Vorderseite (7a) und/oder der Rückseite (7b) des Modulgehäuses (7) des zumindest einen Elektronikmoduls (6) ist bzw. sind mit der Wärmeemissionsschicht (10) beschichtet.

10. Mobilfunkantenne (1) nach einem der vorherigen Ansprüche, **gekennzeichnet durch** das folgende Merkmal:
- zumindest ein Teilbereich der Oberfläche der Vorderseite (7a) und/oder der Rückseite (7b) des Modulgehäuses (7) des zumindest einen Elektronikmoduls (6) ist von der Beschichtung mit der Wärmeemissionsschicht (10) ausgenommen, wobei es sich bei dem zumindest einen Teilbereich um denjenigen handelt, dessen Temperatur im Normalbetrieb unter einem Temperaturschwellwert liegt.

11. Mobilfunkantenne (1) nach einem der Ansprüche 1 bis 9, **gekennzeichnet durch** das folgende Merkmal:
- die Vorderseite (7a) und/oder der Rückseite (7b) des Modulgehäuses (7) des zumindest einen Elektronikmoduls (6) ist bzw. sind vollständig mit der Wärmeemissionsschicht (10) beschichtet.

12. Mobilfunkantenne (1) nach einem der vorherigen Ansprüche, **gekennzeichnet durch** die folgenden Merkmale:
- Innenseiten des Modulgehäuses (7) des zumindest einen Elektronikmoduls (6) sind überwiegend oder vollständig frei von einer Wärmeemissionsschicht (10); oder
- Innenseiten des Modulgehäuses (7) des zumindest einen Elektronikmoduls (6) sind überwiegend oder vollständig mit der Wärmeemissionsschicht (10) beschichtet.

13. Mobilfunkantenne (1) nach einem der vorherigen Ansprüche, **gekennzeichnet durch** das folgende Merkmal:
- die Vorderseite (4a) und/oder Rückseite (4b) der Reflektoranordnung (4) ist bzw. sind teilweise, überwiegend oder vollständig mit einer Wärmeemissionsschicht (10) beschichtet.

14. Mobilfunkantenne (1) nach einem der vorherigen Ansprüche, **gekennzeichnet durch** das folgende Merkmal:
- die Mobilfunkantenne ist so ausgestaltet, dass eine Entwärmung des zumindest einen Elektronikmoduls (6) zu mehr als 40% oder 50% oder 60% oder 70% über Emissionsstrahlung erfolgt.

15. Mobilfunkantenne (1) nach einem der vorherigen Ansprüche, **gekennzeichnet durch** das folgende Merkmal:
- das zumindest eine Elektronikmodul (6) ist ein Combiner oder ein Splitter oder ein Phasenschieber oder ein Schirmdeckel oder ein Netzteil oder ein Motor oder ein Leistungsteiler oder ein Bias Tees oder ein Filter.

## Claims

1. Mobile communication antenna (1) for connecting to at least one base station, comprising the following features:
- a radome (3), a reflector arrangement (4), a plurality of mobile communication radiators (5) and at least one or more electronic modules (6) are provided;
- the radome (3) comprises a front wall, a rear wall and side walls;
- the reflector arrangement (4), the plurality of mobile communication radiators (5) and the at least one or more electronic modules (6) are arranged inside the radome (3) ;
- the plurality of mobile communication radiators (5) are arranged on a front side (4a) of the reflector arrangement (4);
- the at least one or the more electronic modules (6) are arranged on a rear side (4b) of the reflector arrangement (4);
- at least one electronic module (6) comprises an electronic unit and a module housing (7), the electronic unit being arranged in the module housing (7);
- the module housing (7) of the at least one electronic module (6) is made of metal or a metal alloy and comprises a front side (7a), a rear side (7b), end faces (7c) and side walls (7d), wherein the front side (7a) of the module housing (7) of the at least one electronic module (6) points in the direction of the rear wall of the radome (3) and the rear side (7b) of the module housing (7) of the at least one electronic module (6) is opposite the front side (7a) of the module housing (7) of the at least one electronic module (6) and points towards the front wall of the radome (3);
- at least the surface of the front side (7a) and/or the rear side (7b) of the module housing (7) of the at least one electronic module (6) is at least predominantly coated with a heat emission layer (10) which has an emissivity ε, with ε ≥ 0.6.

2. Mobile communication antenna (1) according to claim 1, **characterized by** the following feature:
- the heat emission layer (10) is formed by a lacquer; or
- the heat emission layer (10) is formed by spray lacquer; or
- the heat emission layer (10) is formed by wrinkle paint.

3. Mobile communication antenna (1) according to claim 2, **characterized by** the following feature:
- the lacquer comprises a hill-and-dale structure with different layer thicknesses, wherein a difference between a layer with lower thickness and a layer with higher thickness is greater than 100 µm.

4. Mobile communication antenna (1) according to claim 2 or 3, **characterized by** the following feature:
- the heat emission layer (10) consists of several layers of lacquer.

5. Mobile communication antenna (1) according to claim 1, **characterized by** the following feature:
- the heat emission layer (10) is a sticker unit.

6. Mobile communication antenna (1) according to claim 1, **characterized by** the following feature:
- the heat emission layer (10) is an anodized layer.

7. Mobile communication antenna (1) according to any one of the preceding claims, **characterized by** the following feature:
- at least a part of the module housing (7) of the at least one electronic module (6) is an extruded part or a cast part.

8. Mobile communication antenna (1) according to any one of the preceding claims, **characterized by** the following feature:
- the at least one electronic module (6) and/or the mobile communication antenna (1) is fanless; or
- the mobile communication antenna (1) comprises one or more fans.

9. Mobile communication antenna (1) according to any one of the preceding claims, **characterized by** the following feature:
- more than 50%, 60%, 70%, 80%, 90% of the surface of at least the front side (7a) and/or the rear side (7b) of the module housing (7) of the at least one electronic module (6) is/are coated with the heat emission layer (10) .

10. Mobile communication antenna (1) according to any one of the preceding claims, **characterized by** the following feature:
- at least one partial area of the surface of the front side (7a) and/or the rear side (7b) of the module housing (7) of the at least one electronic module (6) is excluded from the coating with the heat emission layer (10), wherein the at least one partial area is that whose temperature is below a temperature threshold value during normal operation.

11. Mobile communication antenna (1) according to any one of claims 1 to 9, **characterized by** the following feature:
- the front side (7a) and/or the rear side (7b) of the module housing (7) of the at least one electronic module (6) is/are completely coated with the heat emission layer (10).

12. Mobile communication antenna (1) according to any one of the preceding claims, **characterized by** the following feature:
- inner sides of the module housing (7) of the at least one electronic module (6) are predominantly or completely free of a heat emission layer (10); or
- inner sides of the module housing (7) of the at least one electronic module (6) are predominantly or completely coated with the heat emission layer (10).

13. Mobile communication antenna (1) according to any one of the preceding claims, **characterized by** the following feature:
- the front side (4a) and/or rear side (4b) of the reflector arrangement (4) is/are partially, predominantly or completely coated with a heat emission layer (10) .

14. Mobile communication antenna (1) according to any one of the preceding claims, **characterized by** the following feature:
- the mobile communication antenna is configured such that a heat dissipation of the at least one electronic module (6) is achieved by more than 40% or 50% or 60% or 70% via emission radiation.

15. Mobile communication antenna (1) according to any one of the preceding claims, **characterized by** the following feature:
- the at least one electronic module (6) is a combiner or a splitter or a phase shifter or a shielding cover or a power supply unit or a motor or a power splitter or a bias tee or a filter.

## Revendications

1. Antenne radio mobile (1) destinée au raccordement à au moins une station de base, présentant les caractéristiques suivantes :
- un radôme (3), un ensemble réflecteur (4), plusieurs émetteurs de radio mobile (5) et au moins un ou plusieurs modules électroniques (6) sont prévus ;
- le radôme (3) comprend une paroi avant, une paroi arrière et des parois latérales ;
- l'ensemble réflecteur (4), la pluralité d'émetteurs de radio mobile (5) et l'au moins un ou plusieurs modules électroniques (6) sont disposés à l'intérieur du radôme (3) ;
- la pluralité d'émetteurs de radio mobile (5) sont disposés sur une face avant (4a) de l'ensemble réflecteur (4) ;
- l'au moins un ou plusieurs modules électroniques (6) sont disposés sur une face arrière (4b) de l'ensemble réflecteur (4) ;
- au moins un module électronique (6) comprend une unité électronique et un boîtier de module (7), l'unité électronique étant disposée dans le boîtier de module (7) ;
- le boîtier de module (7) de l'au moins un module électronique (6) est constitué de métal ou d'un alliage métallique et comprend une face avant (7a), une face arrière (7b), des faces frontales (7c) et des parois latérales (7d), la face avant (7a) du boîtier de module (7) de l'au moins un module électronique (6) étant orientée en direction de la paroi arrière du radôme (3) et la face arrière (7b) du boîtier de module (7) de l'au moins un module électronique (6) faisant face à la face avant (7a) du boîtier de module (7) de l'au moins un module électronique (6) et étant orientée en direction de la paroi avant du radôme (3) ;
- au moins la surface de la face avant (7a) et/ou de la face arrière (7b) du boîtier de module (7) de l'au moins un module électronique (6) est au moins principalement recouverte d'une couche d'émission de chaleur (10) qui présente une émissivité ε, avec ε ≥ 0,6.

2. Antenne radio mobile (1) selon la revendication 1, **caractérisée par** les caractéristiques suivantes :
- la couche d'émission de chaleur (10) est constituée par un vernis ; ou
- la couche d'émission de chaleur (10) est constituée par un vernis appliqué par pulvérisation ; ou
- la couche d'émission de chaleur (10) est constituée par un vernis appliqué par texturation.

3. Antenne radio mobile (1) selon la revendication 2, **caractérisée par** la caractéristique suivante :
- le vernis comprend une structure montagne-vallée avec différentes épaisseurs de couche, la différence entre une couche de faible épaisseur et une couche d'épaisseur supérieure étant supérieure à 100 µm.

4. Antenne radio mobile (1) selon la revendication 2 ou 3, **caractérisée par** la caractéristique suivante :
- la couche d'émission de chaleur (10) est constituée de plusieurs couches de vernis.

5. Antenne radio mobile (1) selon la revendication 1, **caractérisée par** la caractéristique suivante :
- la couche d'émission de chaleur (10) est une unité d'autocollants.

6. Antenne radio mobile (1) selon la revendication 1, **caractérisée par** la caractéristique suivante :
- la couche d'émission de chaleur (10) est une couche anodisée.

7. Antenne radio mobile (1) selon l'une des revendications précédentes, **caractérisée par** la caractéristique suivante :
- au moins une partie du boîtier de module (7) de l'au moins un module électronique (6) est une pièce extrudée ou une pièce moulée.

8. Antenne radio mobile (1) selon l'une des revendications précédentes, **caractérisée par** les caractéristiques suivantes :
- l'au moins un module électronique (6) et/ou l'antenne radio mobile (1) est sans ventilateur ; ou
- l'antenne radio mobile (1) comprend un ou plusieurs ventilateurs.

9. Antenne radio mobile (1) selon l'une des revendications précédentes, **caractérisée par** la caractéristique suivante :
- plus de 50 %, 60 %, 70 %, 80 %, 90 % de la surface d'au moins la face avant (7a) et/ou la face arrière (7b) du boîtier de module (7) de l'au moins un module électronique (6) est/sont recouverts de la couche d'émission de chaleur (10).

10. Antenne radio mobile (1) selon l'une des revendications précédentes, **caractérisée par** la caractéristique suivante :
- au moins une région partielle de la surface de la face avant (7a) et/ou de la face arrière (7b) du boîtier de module (7) de l'au moins un module électronique (6) est exclue du revêtement de la couche d'émission de chaleur (10), l'au moins une zone partielle étant celle dont la température est inférieure à une valeur seuil de température en fonctionnement normal.

11. Antenne radio mobile (1) selon l'une des revendications 1 à 9, **caractérisée par** la caractéristique suivante :
- la face avant (7a) et/ou la face arrière (7b) du boîtier de module (7) de l'au moins un module électronique (6) est/sont complètement recouvertes de la couche d'émission de chaleur (10).

12. Antenne radio mobile (1) selon l'une des revendications précédentes, **caractérisée par** les caractéristiques suivantes :
- les faces intérieures du boîtier de module (7) de l'au moins un module électronique (6) sont principalement ou complètement exemptes d'une couche d'émission de chaleur (10) ; ou
- les faces intérieures du boîtier de module (7) de l'au moins un module électronique (6) sont recouvertes principalement ou complètement de la couche d'émission de chaleur (10).

13. Antenne radio mobile (1) selon l'une des revendications précédentes, **caractérisée par** la caractéristique suivante :
- la face avant (4a) et/ou la face arrière (4b) de l'ensemble réflecteur (4) est/sont partiellement, principalement ou complètement recouvertes d'une couche d'émission de chaleur (10).

14. Antenne radio mobile (1) selon l'une des revendications précédentes, **caractérisée par** la caractéristique suivante :
- l'antenne radio mobile est conçue de manière qu'une dissipation de chaleur de l'au moins un module électronique (6) atteigne plus de 40 % ou 50 % ou 60 % ou 70 % au moyen d'un rayonnement d'émission.

15. Antenne radio mobile (1) selon l'une des revendications précédentes, **caractérisée par** la caractéristique suivante :
- l'au moins un module électronique (6) est un dispositif de combinaison ou un diviseur ou un déphaseur ou un couvercle de blindage ou une alimentation électrique ou un moteur ou un diviseur de puissance ou un té de polarisation ou un filtre.
